# EUROPÄISCHE PATENTSCHRIFT

(11) **EP 3 511 256 B1**
(45) Veröffentlichungstag und Bekanntmachung des Hinweises auf die Patenterteilung: **04.10.2023**
(21) Anmeldenummer: 18209829.3
(22) Anmeldetag: 03.12.2018
(51) Int. Cl.: B65C 1/02, B65C 9/18, B65C 9/36, G09F 3/02

(54) **SYSTEM UND VERFAHREN ZUM AUFBRINGEN VON STANZTEILEN AUF OBERFLÄCHEN**
SYSTEM AND METHOD FOR APPLYING STAMPED PARTS TO SURFACES
SYSTÈME ET PROCÉDÉ D'APPLICATION DES PIÈCES D'ESTAMPAGE SUR DES SURFACES

(30) Priorität: 12.01.2018 DE 102018200439
(43) Veröffentlichungstag der Anmeldung: 17.07.2019
(73) Patentinhaber: tesa SE, 22848 Norderstedt (DE)
(72) Erfinder: BRANDT, Hans-Peter, 22869 Schenefeld (DE)
(74) Vertreter: tesa SE

(56) Entgegenhaltungen:
- CN-A- 107 264 905
- DE-A1- 19 621 857
- JP-A- H10 258 818
- US-A1- 2002 108 718

## Beschreibung

Die Erfindung betrifft ein System umfassend einen beweglichen Roboter und einen Applikator für Stanzteile mit einem Stanzteilband mit entlang eines Haltegurtes aufgebrachten Stanzteilen mit einer Träger- und einer Klebmasseschicht. Die Erfindung betrifft auch ein Verfahren zum Aufbringen von Stanzteilen auf eine Oberfläche.

Bei der Herstellung von Kraftfahrzeugen entsteht häufig das Problem, dass in Karosserieteilen eingebrachte Öffnungen nach Bearbeitungsvorgängen wieder verklebt werden müssen. Beispielsweise können Karosserieteile mit Flüssigkeit oberflächenbehandelt werden. Die zur Oberflächenbehandlung erforderliche Flüssigkeit läuft über in die Karosserieteile vorher eingebrachte Öffnungen von selbst ab. Nachträglich werden die Öffnungen wieder verschlossen. Das Verschließen der Öffnungen erfolgt häufig per Hand, indem Stanzteile von einem Stanzteilband oder einem Stanzteilblatt abgenommen und per Hand auf die Öffnungen aufgeklebt werden. Die Stanzteile weisen eine Trägerschicht auf und eine auf der einen Seite der Trägerschicht aufgebrachte Klebmasseschicht. Die Klebmasseschicht ist in der Regel vollflächig auf die Trägerschicht aufgebracht.

Im Stand der Technik sind darüber hinaus Roboterarme bekannt.

Dazu wird eine Stanzteilrolle, auf der ein Stanzteilband in herkömmlicher Weise aufgewickelt ist, zur Verfügung gestellt. Bei dem Stanzteilband handelt es sich in der Regel um einen Liner, der bandförmig vorliegt. Auf diesen Liner sind der Reihe nach voneinander beabstandet Stanzteile mit Trägerschicht und Klebmasseschicht derart aufgebracht, dass die freie Seite der Klebmasseschicht auf dem Liner aufgeklebt ist, sodass die dem Liner gegenüberliegende Seite der Klebmasseschicht von der Trägerschicht abgedeckt ist, so dass die Klebmasse vollständig geschützt ist. Das Stanzteilband kann dann aufgewickelt werden, und zwar so, dass der Liner wicklungsaußenseitig und die Stanzteile wicklungsinnenseitig auf einer Stanzteilrolle angeordnet sind. Bekannterweise wird das freie Ende des Stanzteilbandes abgezogen und in einer Vorrichtung eingespannt, und ein Roboterarm saugt die Stanzteile nacheinander vom Stanzteilband ab. Dazu ist der Roboterarm rüsselartig ausgebildet und saugt das Stanzteil an der Trägerschicht an, löst es von dem Liner ab und drückt das Stanzteil auf die Öffnung in der vorgegebenen Position.

Nachteiligerweise ist dieses Verfahren relativ zeitaufwendig, da der Roboterarm nach jedem Klebevorgang wieder zur Stanzteilrolle zurückbewegt werden muss, um den nächsten Stanzteil vom Stanzteilband abzulösen.

Darüber hinaus sind Applikatoren in Form von Etikettenspendern bekannt. Dabei ist der Etikettenspender an einem Roboterarm angeordnet. Der Etikettenspender weist die Stanzteilrolle auf. Die Stanzteilrolle wird zu einer Andruckwalze geführt und der Liner automatisch abgezogen und der Stanzteil durch Verfahren des Etikettenspenders mithilfe der Andruckwalze auf das Loch aufgedrückt. Nachteiligerweise ist dieses Verfahren ziemlich platzaufwendig, da der Etikettenspender mithilfe des Roboterarms über eine gewisse Strecke gezogen werden muss. Das z. B. ist nachteilig in schlecht zugänglichen Bereichen eines Autoblechs, beispielsweise, wenn die zu verschließende Öffnung direkt neben einer hochgebogenen Kante platziert ist.

Aus der US 2002/108718 A1 ist eine Vorrichtung zum Aufkleben eines Klebstoffmusters bekannt. Die Vorrichtung rollt ein Ölpapier auf dem die Klebstoffmuster aufgebracht sind ab und befördert sie selbsttätig vor ein Stempelteil, indem eine Zahnstange des Stempelteils lineare Bewegung ausführt und in ein Zahnrad eingreift. Durch Ausüben einer Kraft Auf den Stempelteil, wird das Klebstoffmuster auf eine Oberfläche aufgeklebt. Danach befördert die Vorrichtung ein weiteres Klebstoffmuster selbsttätig vor den Stempelteil.

Die US 2002/108718 A1 offenbart ein System umfassend einen Applikator für Stanzteile, wobei der Applikator ein Stanzteilband mit entlang eines Haltegurtes aufgebrachten Stanzteilen, mit einer Träger- und einer Klebmasseschicht, umfasst, wobei die Trägerschicht zwischen dem Haltegurt und der Klebmasseschicht angeordnet ist, einen Stempelkopf, über den das Stanzteilband verläuft, wobei die über den Stempelkopf laufenden Stanzteile mit ihrer Klebmassschicht dem Stempelkopf abgewandt sind und die Stanzteile mittels des Stempels auf eine Oberfläche aufdrückbar sind.

Aus der DE 196 21 857 A1 ist eine Ausstattungsmaschine zum Dekorieren bzw. Etikettieren von Flaschenkästen bekannt. Die Flaschenkisten werden dabei während eines Fördervorgangs etikettiert, indem ein Spendeaggregat das Trägerband auf die Geschwindigkeit der Flaschenkisten beschleunigt wird, sodass die Relativgeschwindigkeit zwischen Flaschenkiste und Träger null wird. Das Trägerband wird gleichzeitig unter einem Winkel an die Flaschenkiste herangeführt, bis das Trägerband samt des darauf befindlichen Druckbilds die Flaschenkiste berührt. Eine Bürstenwalze schmiegt das Druckbild während des Kontakts von Druckbild und Flaschenkiste an die Flaschenkiste an.

Aus der JP H10 258818 A ist eine Etikettiermaschine bekannt mit der Etiketten durch einen an einem Zylinder angebrachten Ausdrücker auf eine vorbeitransportierte Klebefläche eines zu beklebenden Gegenstandes aufgedrückt werden können. Das Etikett befindet sich auf einem vorgestanzten Träger. Das Etikett wird samt eines Teils des vorgestanzten Trägers mittels des Ausdrückers durch den Träger hindurchgedrückt und auf den Gegenstand gedrückt. Der ebenfalls hindurchgedrückte Teil des Trägers wird anschließend durch eine Vakuumdüse des Ausdrückers, die mit einer Vakuumeinheit verbunden ist, abgesaugt.

Es ist daher Aufgabe der vorliegenden Erfindung, einen Applikator zur Verfügung zu stellen, der die oben genannten Nachteile verringert. Es ist auch Aufgabe der Erfindung, ein Verfahren zur Verfügung zu stellen, mit dem Stanzteile aufgeklebt werden können und die oben genannten Nachteile vermieden werden.

Hinsichtlich des Applikators wird die Aufgabe durch ein System umfassend einen beweglichen Roboter und einen eingangs genannten Applikator für Stanzteile mit den Merkmalen des Anspruchs 1 gelöst.

Der Applikator für Stanzteile umfasst ein Stanzteilband mit entlang eines Haltegurtes aufgebrachten Stanzteilen. Die Stanzteile weisen jeweils eine Träger- und eine Klebmasseschicht auf, wobei die Trägerschicht zwischen dem Haltegurt und der Klebmasseschicht angeordnet ist. Die Stanzteile sind daher gegenüber dem Stand der Technik gleichsam umgedreht auf den Haltegurt aufgebracht. Der Applikator umfasst einen hin und her verfahrbaren Stempel mit einem Stempelkopf, über den das Stanzteilband läuft, wobei die über den Stempelkopf laufenden Stanzteile mit ihrer Klebmasseschicht dem Stempelkopf abgewandt sind. Dadurch ist es möglich, dass die Stanzteile mittels eines Stempels auf eine Oberfläche aufdrückbar sind.

Es ist eine Steuerung vorgesehen. Die Steuerung umfasst einen ersten Sensor, der mit einem Abtastbereich auf den Stempelkopf gerichtet ist und das Vorhandensein eines Stanzteils am Stempelkopf registriert. Die Steuerung ist mit dem Sensor signalleitend verbunden und Messwerte des Sensors werden der Steuerung zugeführt. Darüber hinaus ist die Steuerung mit einem Stellantrieb des Stempelkopfes bzw. des Applikators signalleitend verbunden. Der Stellantrieb steuert zum einen eine Hin-und-her-Bewegung des Stempelkopfes in einer z-Richtung senkrecht zur Oberfläche und zum anderen eine Bewegung in einer xy Ebene parallel zur Oberfläche. Des Weiteren wird der getaktete Vortrieb des Stanzteilbandes gesteuert, mit dem das nachfolgende Stanzteil auf dem Stempelkopf positioniert werden kann. Der Vortrieb des Stanzteilbandes kann als angetriebene erste Aufwickelrolle für den Haltegurt ausgebildet sein.

Wenn der erste Sensor das Vorhandensein eines Stanzteils am Stempelkopf signalisiert und einen entsprechenden Messwert an die Steuerung leitet, wird der Vortrieb des Stanzteilbandes gestoppt, und dem Stellantrieb ein Signal zugeführt, und der Stellantrieb bewegt den Stempelkopf in einer Hin-Bewegung auf die Oberfläche zu und in einer Her-Bewegung von der Oberfläche zurück. Die Hin-Bewegung erfolgt dabei so weit, bis der Stanzteil auf der Oberfläche aufklebt. Dafür kann ein entsprechender Drucksensor am Stempel angeordnet sein, der den Druckwiderstand durch die Oberfläche registriert.

Die Steuerung beaufschlagt den Stellantrieb erst dann mit dem entsprechenden Signal, wenn der Stempelkopf seine vorgesehene erste Position über der zu verschließenden Öffnung erreicht hat. Damit der Applikator von der ersten Position zur nächsten Position verbracht wird, ist der Steuerung vorzugsweise ein Öffnungsmuster oder Klebemuster einprogrammiert. Die Steuerung kann dazu als NC-Steuerung ausgebildet sein Es ist auch denkbar, dass ein zweiter Sensor vorgesehen ist, der die Löcher beim Überfahren der Oberfläche registriert. Es kann auch eine Kombination aus NC-Steuerung und Sensorik vorgesehen sein.

Günstigerweise steuert die Steuerung den Stellantrieb an, der den Stempelkopf in eine erste Position über die Oberfläche bewegt und das Stanzteil an einer ersten Oberflächenposition aufklebt, und sie steuert nach dem Aufkleben des Stanzteils den Stellantrieb wiederum an und bewegt den Stempelkopf in xy-Richtung in eine zweite Position über der Oberfläche; dort wird das nächste Stanzteil durch eine Hin-Bewegung in z-Richtung auf die nächste Öffnung aufgeklebt.

Günstigerweise ist eine Stanzteilrolle auf einer Zuführseite des Stempelkopfes und eine erste Aufwickelrolle auf einer Abführseite des Stempelkopfes vorgesehen. Die erste Aufwickelrolle ist mit der Steuerung signalleitend verbunden, und auf ihr ist das Gurtband des Stanzteilbandes aufwickelbar. Die Steuerung dreht die erste Aufwickelrolle getaktet. Dabei entspricht der Vorschub eines Taktes jeweils dem Abstand benachbarter Stanzteile auf dem Stanzteilband.

In einer weiteren bevorzugten Ausführungsform der Erfindung ist eine zweite Aufwickelrolle an der Zuführseite zum Aufwickeln eines Liners vorgesehen. Die freie Klebseite des Stanzteilbandes kann optional mit einem Liner abgedeckt sein. Der Liner ist dann auf der zweiten Aufwickelrolle auf der Zuführseite, bevor das Stanzteil dem Stempelkopf zugeführt wird, abzuziehen.

Die Aufgabe wird auch durch ein oben genanntes Verfahren mit den Merkmalen des Anspruchs 4 gelöst.

Das Verfahren eignet sich zur Durchführung mit einem der oben genannten Applikatoren; umgekehrt eignen sich die Applikatoren auch zur Durchführung einer der folgenden Verfahren. Erfindungsgemäß wird ein Stanzteilband mit entlang eines Haltegurtes aufgebrachten Stanzteilen über einen Stempelkopf eines hin und her verfahrbaren Stempels bewegt, wobei die Stanzteile eine Träger- und eine Klebmasseschicht aufweisen und die Trägerschicht zwischen dem Haltegurt und der Klebmasseschicht angeordnet wird.

Erfindungsgemäß wird das Stanzteilband gestoppt, wenn ein Stanzteil über dem Stempelkopf positioniert ist, und der Stempel wird dann in einer Hin-Bewegung auf die Oberfläche bewegt und das Stanzteil auf die Oberfläche geklebt. Währen der Hin-Bewegung wird das Stanzteilband etwas nachgeführt, damit das Stanzteil nicht vom Stempelkopf rutscht. Ebenso wird das Stanzteilband während der Her-Bewegung ebenfalls durch Nachführen des Stanzteilbandes gespannt gehalten

Das erfindungsgemäße Verfahren ermöglicht es in einfacher Weise, Stanzteile auf einer Oberfläche, insbesondere auf Öffnungen, zu positionieren, wobei das Stanzteil natürlich im Durchmesser etwas größer als die Öffnung gewählt wird, damit ein Kleberand entsteht. Natürlich können die Stanzteile aber auch auf andere Positionen als auf Öffnungen geklebt werden.

Aufgrund der Hin-und-her-Bewegung des Stempelkopfes in der z-Richtung wird nur sehr wenig Platz in xy-Richtung benötigt, um einem Stanzteil auf einer Oberfläche aufzubringen. Dies ist ein Vorteil gegenüber den bekannten Etikettenspendern.

Darüber hinaus ist es vorzugsweise möglich, dass eine erste Position auf der Oberfläche bestimmt wird, das Stanzteil auf die erste Position geklebt wird und dass eine zweite Position bestimmt wird und der Stempel bereits während der Weitertaktung des Stanzteilbandes zur zweiten Position bewegt wird. Vorzugsweise ist das nächste Stanzteil bereits wieder auf dem Stanzteilkopf angeordnet, wenn der Stempel seine vorgesehene zweite Position erreicht hat. Dieses ist gegenüber dem bekannten Roboterarm eine erhebliche Zeitersparnis.

Es wird ein erster Sensor auf den Stempelkopf gerichtet der das Vorhandensein des Stanzteils erkennt. Beim Erkennen des Stanzteils wird das Stanzteilband gestoppt und wenn der Stempel seine Position über der Oberfläche erreicht hat, wird der Stempel zur Oberfläche bewegt, das Stanzteil aufgeklebt und das Stanzteilband um ein Stanzteil weitergetaktet. Dafür ist eine Steuerung mit und für einen Stellantrieb des Stempels bzw. Applikators vorgesehen. Der Stellantrieb ist zum Verfahren des Stempelkopfes bzw. Applikators in der xy-Ebene parallel zur Oberfläche ausgebildet, während die Hin-und-her-Bewegung des Stempels in z-Richtung erfolgt.

Die Steuerung steuert auch die Geschwindigkeit und den Winkel einer Aufwickelrolle, auf der das Gurtband aufgewickelt wird, sowie gegebenenfalls die Geschwindigkeit und den Drehwinkel einer zweiten Aufwickelrolle, auf der ein optionaler Liner aufgewickelt werden kann.

Das erfindungsgemäß eingesetzte Stanzteilband weist ein Gurtband auf und eine Reihe von auf dem Gurtband nebeneinander angeordneten Stanzteilen mit jeweils einer Trägerschicht und einer Klebmasseschicht, wobei die Trägerschicht zwischen dem Gurtband und der Klebmasseschicht angeordnet ist. Die Stanzteile sind gegenüber den bekannten Stanzteilbändern gleichsam verkehrt herum auf das Gurtband aufgebracht. Die Klebmasseschicht liegt frei und kann durch Druck auf das Gurtband auf eine Oberfläche aufgeklebt und das Gurtband dann von der Trägerschicht abgezogen werden. Dafür ist die Trennkraft zwischen der Klebmasseschicht und der zu beklebenden Oberfläche vorzugsweise größer gewählt als die Trennkraft zwischen dem Gurtband und der Trägerschicht. Bei dem Gurtband kann es sich ebenfalls um ein Klebeband handeln mit einer Gurtbandträgerschicht und einer Gurtbandklebmasseschicht.

In einer weiteren Ausführungsform des Stanzteilbandes ist ein Liner vorgesehen, der entlang der Klebmasseschicht angeordnet ist und die freien Seiten der Klebmasseschichten der Stanzteile abdeckt. Der Liner kann bandförmig parallel beabstandet zum Gurtband angeordnet sein. Das Stanzteilband kann mit Gurtband, Stanzteil und Liner zur Stanzteilrolle aufgewickelt werden. In beiden Ausführungsformen des Stanzteilbandes ist das aufgewickelte Stanzteilband mit dem Gurtband wicklungsinnenseitig und mit den Stanzteilen wicklungsaußenseitig aufgewickelt.

Die Erfindung wird anhand von zwei Ausführungsbeispielen in vier Figuren beschrieben. Dabei zeigen:
- Fig. 1: eine prinzipielle Seitenansicht eines erfindungsgemäß eingesetzten Stanzteilbandes in einer ersten Ausführungsform,
- Fig. 2: eine prinzipielle Seitenansicht eines Applikators in einer ersten Ausführungsform für das Stanzteilband der ersten Ausführungsform,
- Fig. 3: eine prinzipielle Seitenansicht eines Stanzteilband in einer zweiten Ausführungsform und
- Fig. 4: eine prinzipielle Seitenansicht eines Applikators in einer zweiten Ausführungsform für das Stanzteilband in der zweiten Ausführungsform.

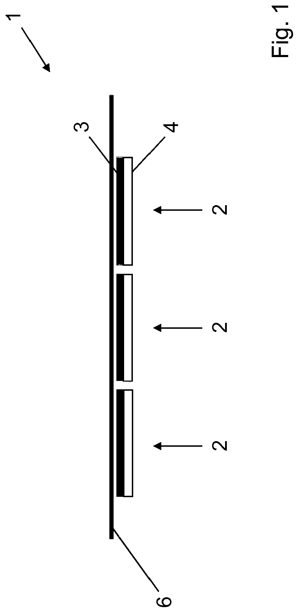

Ein in der Fig. 1 dargestelltes Stanzteilband 1 weist in einer Reihe angeordnete, ausgerichtete Stanzteile 2 auf, die voneinander beabstandet sind. Der Abstand der Stanzteile 2 voneinander richtet sich nach der jeweiligen Applikation; er kann 1 mm, 2 mm, 3 mm bis 6 mm oder 7 mm betragen. Es sind auch alle Zwischenwerte mitoffenbart. Die Stanzteile 2 sind entlang eines Haltegurtes 6 angeordnet.

Die Stanzteile 2 umfassen jeweils eine Trägerschicht 3 und eine Klebmasseschicht 4. Die Trägerschicht 3 besteht aus gängigen Kunststoffen bestehen, beispielhaft, aber nicht einschränkend erwähnt seien:
Polyethylen, Polypropylen - insbesondere das durch mono- oder biaxiale Streckung erzeugte orientierte Polypropylen (OPP), cyclische Olefin Copolymere (COC), Polyvinylchlorid (PVC), Polyester - insbesondere Polyethylenterephthalat (PET) und Poylethylennaphthalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Die Klebmasseschicht 4 besteht aus einer üblichen Haftklebmasse. Die Haftklebmasse umfasst eine Basis und eine vernetzbare Komponente, auch als Reaktivharz bezeichnet.

Als Basis für Haftklebmassen kommen verschiedene Materialien, insbesondere unpolare Elastomere in Frage.

Unpolare Elastomere, wie beispielsweise Vinylaromaten-Blockcopolymere, zeichnen sich dadurch aus, dass sie in unpolaren Lösungsmitteln gelöst werden können, d. h. in Lösungsmitteln und/oder Lösungsmittelgemischen, deren Polarität Ethylacetat entspricht oder die unpolarer sind. Dies sind insbesondere Lösungsmittel und/oder Lösungsmittelgemische mit einer Dielektrizitätskonstante von kleiner 6.1 [http://en.wikipedia.org/wiki/Solvent] und/oder mit Hansenparametern δP Polar ≤ 5.3; δH Hydrogen bonding ≤ 7.2 [Abbott, Steven and Hansen, Charles M. (2008) Hansen Solubility Parameters in Practice, ISBN 0-9551220-2-3 oder Hansen, Charles M. (2007) Hansen solubility parameters: a user's handbook CRC Press, ISBN 0-8493-7248-8].

Kommen als Elastomere Blockcopolymere zum Einsatz, dann enthalten diese zumindest eine Blocksorte mit einer Erweichungstemperatur von größer 40 °C wie zum Beispiel Vinylaromate (auch teil- oder vollhydrierte Varianten), Methylmethacrylat, Cyclohexylmethacrylat, Isobornylmethacrylat und Isobornylacrylat.

Weiter vorzugsweise enthält das Blockcopolymer eine Blocksorte mit einer Erweichungstemperatur von kleiner - 20 °C.

Beispiele für Polymerblöcke mit niedrigen Erweichungstemperaturen ("Weichblöcke") sind Polyether wie zum Beispiel Polyethylenglykol, Polypropylenglykol oder Polytetrahydrofuran, Polydiene wie zum Beispiel Polybutadien oder Polyisopren, (teil)hydrierte Polydiene wie zum Beispiel Polyethylenbutylen, Polyethylenpropylen oder Polybutylenbutadien, Polybutylen, Polyisobutylen, Polyalkylvinylether, Polymerblöcke α,β-ungesättigter Ester wie insbesondere Acrylat-Copolymere.

Der Weichblock ist dabei in einer Auslegung unpolar aufgebaut und enthält dann bevorzugt Butylen oder Isobutylen oder hydrierte Polydiene als Homopolymerblock oder Copolymerblock, letztere vorzugsweise mit sich selbst oder miteinander oder mit weiteren, besonders bevorzugt unpolaren Comonomeren copolymerisiert. Als unpolare Comonomere sind beispielsweise (teil-)hydriertes Polybutadien, (teil-)hydriertes Polyisopren und/oder Polyolefine geeignet.

Die vernetzbare Komponente, auch als Reaktivharz bezeichnet, besteht aus einem cyclischen Ether und eignet sich für die strahlenchemische und gegebenenfalls thermische Vernetzung mit einer Erweichungstemperatur von kleiner 40 °C, bevorzugt von kleiner 20 °C.

Bei den Reaktivharzen auf Basis cyclischer Ether handelt es sich insbesondere um Epoxide, also Verbindungen, die zumindest eine Oxiran-Gruppe tragen, oder Oxetane. Sie können aromatischer oder insbesondere aliphatischer oder cycloaliphatischer Natur sein.

Einsetzbare Reaktivharze können monofunktionell, difunktionell, trifunktionell, tetrafunktionell oder höher funktionell bis zu polyfunktionell gestaltet sein, wobei sich die Funktionalität auf die cyclische Ethergruppe bezieht.

Beispiele, ohne sich einschränken zu wollen, sind 3,4-Epoxycyclohexylmethyl-3',4'-epoxycyclohexancarboxylat (EEC) und Derivate, Dicyclopendadiendioxid und Derivate, 3-Ethyl-3-oxetanmethanol und Derivate, Tetrahydrophthalsäurediglycidylester und Derivate, Hexahydrophthalsäurediglycidylester und Derivate, 1,2-Ethandiglycidylether und Derivate, 1,3-Propandiglycidylether und Derivate, 1,4-Butandioldiglycidylether und Derivate, höhere 1,n-Alkandiglycidylether und Derivate, Bis-[(3,4-epoxycyclohexyl)methyl]-adipat und Derivate, Vinylcyclohexyldioxid und Derivate, 1,4-Cyclohexandimethanol-bis-(3,4-epoxycyclohexancarboxylat) und Derivate, 4,5-Epoxytetrahydrophthalsäurediglycidylester und Derivate, Bis-[1-ethyl(3-oxetanyl)methyl)ether und Derivate, Pentaerythritoltetraglycidylether und Derivate, Bisphenol-A-Digylcidylether (DGEBA), hydriertes Bisphenol-A-Diglycidylether, Bisphenol-F-Diglycidylether, hydriertes Bisphenol-F-Diglycidylether, Epoxyphenol-Novolaks, hydrierte Epoxyphenol-Novolaks, Epoxycresol-Novolaks, hydrierte Epoxycresol-Novolaks, 2-(7-Oxabicyclo)Spiro[1,3-dioxane-5,3'-[7]oxabicyclo[4.1.0]-heptane], 1,4-Bis((2,3-epoxypropoxy)methyl)cyclohexane.

Reaktivharze können in ihrer monomeren oder auch dimeren, trimeren, usw. bis hin zu ihrer oligomeren Form eingesetzt werden.

Gemische von Reaktivharzen untereinander, aber auch mit anderen coreaktiven Verbindungen wie Alkoholen (monofunktionell oder mehrfach funktionell) oder Vinylethern (monofunktionell oder mehrfach funktionell), sind ebenfalls möglich.

Die Klebmasseschicht 4 ist vollflächig auf die eine Seite der Trägerschicht 3 aufgebracht. Die eine Seite der Trägerschicht 3 ist dem Haltegurt 6 gegenüberliegend angeordnet. Die Trägerschicht 3 weist eine zweite dem Haltegurt 6 zugewandte Seite auf, die mit dem Haltegurt 6 verklebt ist. Der Haltegurt 6 selbst ist ein Klebeband mit einer (nicht dargestellten) Haltegurtträgerschicht und einer (nicht dargestellten) Haltegurtklebmasseschicht, auf die die Stanzteile 2 gegenüber dem Stand der Technik andersherum aufgeklebt sind. Die Trägerschicht 3 ist zwischen der Klebmasseschicht 4 und dem Haltegurt 6 angeordnet.

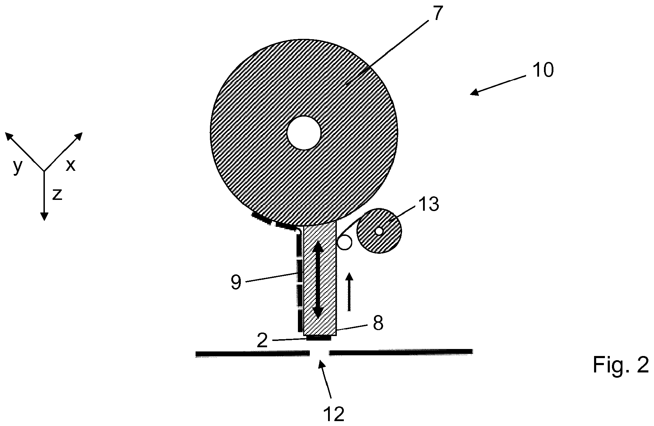

Das Stanzteilband 1 gemäß Fig. 1 ist zunächst auf einer Stanzteilrolle 7 gemäß Fig. 2 aufgewickelt. Ein Ende des Stanzteilbandes 1 wird von der Stanzteilrolle 7 gelöst und gemäß Fig. 2 um einen Stempelkopf 8 eines Stempels 9 herumgelegt. Die Stanzteilrolle 7 ist auf einen nicht näher dargestellten Stift aufgesteckt und auf ihm drehbar gelagert. Fig. 2 zeigt lediglich den prinzipiellen Aufbau eines Applikators 10 in der ersten Ausführungsform.

Zur Führung des Stanzteilbandes 1 sind natürlich noch Umlenkrollen u. Ä. vorgesehen, die in der Fig. 2 nicht eingezeichnet sind. Das Stanzteilband 1 wird, ausgehend von der Stanzteilrolle 7, um den Stempel 9 und insbesondere um den Stempelkopf 8 herumgeführt. Der Stempel 9 ist hin und her beweglich. Es ist ein Stellmotor vorgesehen, der die Hin-und-her-Bewegung, d. h. eine Hin-Bewegung vom Applikator 10 weg in eine Her-Bewegung zum Applikator 10 hin antreibt. Der Stellmotor ist nicht eingezeichnet. Darüber hinaus ist der Stellmotor dazu vorgesehen, die Stempel 9 über die in z-Richtung verlaufende Hin-und-her-Bewegung auch in x- und y-Richtung, d. h. parallel zu einer Oberfläche 11, zu bewegen. Die Oberfläche 11 ist in Fig. 2 mit einer Öffnung 12 dargestellt. Der Applikator 10 ist dazu vorgesehen, eines der Stanzteile 2 auf jeweils eine der Öffnungen 12 zu kleben und die Öffnung 12 damit zu verschließen.

Die Öffnungen 12 weisen üblicherweise einen kreisförmigen oder ovalen Öffnungsquerschnitt mit einem Durchmesser von etwa 20 mm auf. Die Stanzteile 2 haben daher einen kreisförmigen Durchmesser von etwa 30 mm, so dass ein 5 mm breiter Kleberand, die Öffnung 12 umlaufend, ausgebildet wird. Der Vorschub des Stanzteilbandes 1 wird durch eine angetriebene erste Aufwickelrolle 13 zur Verfügung gestellt.

Die erste Aufwickelrolle 13 wickelt nur den Haltegurt 6, nachdem die Stanzteile 2 der Reihe nach aufgeklebt wurden, auf, also ohne die Stanzteile 2.

Es ist eine Steuerung vorgesehen, die die erste Aufwickelrolle 13 getaktet in einem Winkel dreht, der dem Abstand der Stanzteile 2 voneinander entspricht, so dass für jeden Klebvorgang genau eines der Stanzteile 2 auf dem Stempelkopf 8 positioniert ist. In einer Klebstellung, die in Fig. 2 dargestellt ist, ist das Stanzteil 2 auf dem Stempelkopf 8 angeordnet. Er kann in diesem Zustand durch Hin-Bewegung des Stempels 9 auf die Öffnung 12 geklebt werden.

Eine Steuerung des Applikators 10 funktioniert dabei wie folgt: Es ist ein erster Sensor vorgesehen, der auf den Stempelkopf 8 gerichtet ist und der das Vorhandensein des Stanzteils 2 auf dem Stempelkopf 8 registriert. Bei Vorhandensein des Stanzteils 2 gibt der erste Sensor ein Signal an die Steuerung ab, die ein Stoppsignal an einen Antrieb der ersten Aufwickelrolle 13 abgibt. Die Drehbewegung der ersten Aufwickelrolle 13 wird gestoppt. Der Stempel 9 wird in einer Hin-Bewegung ausgefahren und damit das Stanzteil 2 auf die Öffnung 12 gedrückt. Daraufhin wird der Stempel 9 wieder eingefahren und durch die Steuerung koordiniert, die erste Aufwickelrolle 13 etwas gedreht, so dass das Stanzteilband 1 nicht lose über dem eingefahrenen Stempelkopf 8 hängt. Die erste Aufwickelrolle 13 wird dann weitergedreht, so dass das nächste Stanzteil 2 auf dem eingezogenen Stempelkopf 8 positioniert ist. Während des Weitertransportes des Stanzteilbandes 1 wird durch den Antrieb der gesamte Applikator 10 von einer Position über der in Fig. 2 dargestellten Öffnung 12 in eine nächste Position verfahren, in der der Stempelkopf 8 über der nächsten Öffnung 12 positioniert ist. Es kann entweder ein zweiter Sensor vorgesehen sein, der die nächste Öffnung 12 registriert und ein Signal an die Steuerung abgibt, die den Antrieb stoppt, so dass der Applikator 10 in der nächsten Position über der Oberfläche 11 stehenbleibt, oder es ist vorgesehen, dass in der Steuerung des Applikators 10 das Öffnungsmuster der Oberfläche 11 abgelegt ist, so dass der Applikator 10 nacheinander die Öffnungen 12 anfährt.

Das Stanzteilband 1 der Fig. 1 ist mit dem Haltegurt 6 wicklungsinnenseitig und mit den Stanzteilen 2 wicklungsaußenseitig zur Stanzteilrolle 7 aufgewickelt, so dass beim Abwickeln die Klebmasseschicht 4 freiliegt und beim Herüberziehen des Stanzteilbandes 1 über den Stempelkopf 8 auf die Öffnung 12 aufgeklebt werden kann.

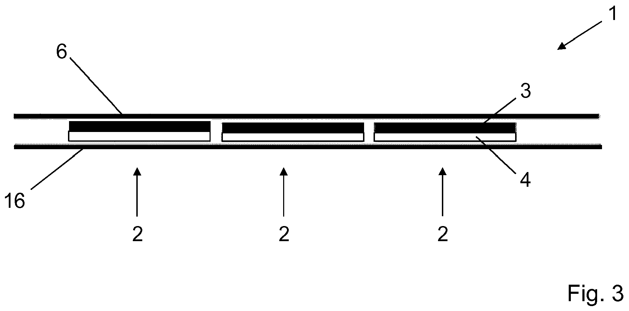

Fig. 3 zeigt eine zweite Ausführungsform des erfindungsgemäß eingesetzten Stanzteilbandes 1, die zusätzlich zur ersten Ausführungsform einen Liner 16 umfasst. Der Liner 16 ist parallel und beabstandet zum Haltegurt 6 entlang des Stanzteilbandes 1 angeordnet. Der Liner 16 klebt die freie Klebseite der Klebmasseschicht 4 ab, so dass diese vor Verunreinigungen u.Ä. geschützt ist. Darüber hinaus werden ein Aufwickeln des Stanzteilbandes 1 zur Stanzteilrolle 7 und ein nachträgliches Abwickeln erleichtert. Die Trennkräfte sind so dimensioniert, dass die Trennkraft zwischen der Klebmasseschicht 4 und dem Liner 16 kleiner ist als die Trennkraft zwischen der Trägerschicht 3 und dem Haltegurt 6.

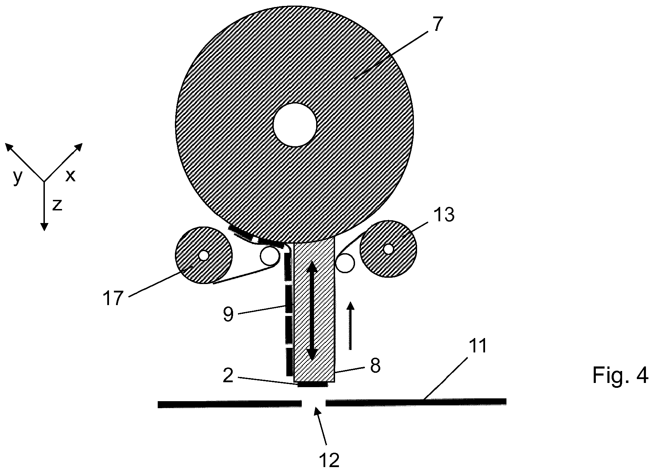

Eine zweite Ausführungsform des Applikators 10 ist in Fig. 4 dargestellt. Die zweite Ausführungsform ist zum Aufbringen der Stanzteile 2 des Stanzteilbandes 1 gemäß Fig. 3 vorgesehen. Der zweite Applikator 10 weist gegenüber dem ersten Applikator 10 zusätzlich eine zweite Aufwickelrolle 17 auf, die auf einer Zuführseite des Stempelkopfes 8 angeordnet ist, während die erste Aufwickelrolle 13 auf der Abführseite des Stempelkopfes 8 angeordnet ist. Die zweite Aufwickelrolle 17 rollt zunächst den Liner 16 auf der Zuführseite des Stempelkopfes 8 auf, so dass die Klebmasseschicht 4 der Stanzteile 2 freiliegt und dann gemäß Fig. 4 das vom Liner 16 befreite Stanzteilband 1 um den Stempelkopf 8 herumgeführt werden kann. Der eigentliche Aufklebevorgang läuft genauso wie bei der ersten Ausführungsform der Erfindung ab. Abschließend wird der Haltegurt 6 auf der ersten Aufwickelrolle 13 wiederum aufgerollt. Nach Verbrauch der Stanzteile 2 ist der Liner 16 komplett auf der zweiten Aufwickelrolle 17 und der Haltegurt 6 komplett auf der ersten Aufwickelrolle 13 aufgewicklet und kann einem Recycling zugeführt werden.

### Bezugszeichenliste

- 1: Stanzteilband
- 2: Stanzteil
- 3: Trägerschicht
- 4: Klebmasseschicht

- 6: Haltegurt
- 7: Stanzteilrolle
- 8: Stempelkopf
- 9: Stempel
- 10: Applikator
- 11: Oberfläche
- 12: Öffnung
- 13: erste Aufwickelrolle

- 16: Liner
- 17: zweite Aufwickelrolle

## Patentansprüche

1. System umfassend einen beweglichen Roboter und einen Applikator für
Stanzteile,wobei der Applikator ein Stanzteilband (1) mit entlang eines Haltegurtes (6) aufgebrachten Stanzteilen (2) mit einer Träger- (3) und einer Klebmasseschicht (4) umfasst, wobei die Trägerschicht (3) zwischen dem Haltegurt (6) und der Klebmasseschicht (4) angeordnet ist, einen
Stempelkopf (8), über den das Stanzteilband (1) verläuft, wobei die über den Stempelkopf (8) laufenden Stanzteile (2) mit ihrer Klebmasseschicht (4) dem Stempelkopf (8) abgewandt sind und die Stanzteile (2) mittels des Stempels (9) auf eine Oberfläche (11) aufdrückbar sind,
wobei
eine Steuerung mit einem ersten Sensor, der mit einem Abtastbereich auf der Stempelkopf (8) gerichtet ist und das Vorhandensein eines der Stanzteile (2) am Stempelkopf (8) registriert, und einem Stellantrieb des Stempelkopfs (8) signalleitend verbunden ist und die Steuerung einer ersten Aufwickelrolle (13) des Stanzteilbandes (1) bei Registrierung eines der Stanzteile (2) am Stempelkopf (8) stoppt und dann den Stellantrieb ansteuert und eine Hin-Bewegung und eine Her-Bewegung des Applikators 10 samt Stempelkopfs (8) antreibt, wobei der Applikator 10 an dem beweglichen Roboter befestigt ist, die Steuerung den Roboter ansteuert und in eine erste Position über der Oberfläche (11) bewegt und das Stanzteil (2) in einer ersten Oberflächenposition aufklebt und nach dem Aufkleben des Stanzteils (2) ansteuert und es in eine zweite Position über der Oberfläche (11) bewegt und dort eine Hin-Bewegung und eine Her-Bewegung des Stempelkopfs (8) antreibt.

2. System nach Anspruch 1,
**gekennzeichnet durch** eine Stanzteilrolle (7) auf einer Zuführseite des Stempelkopfes (8) und einer ersten Aufwickelrolle (13) auf einer Abführseite des Stempelkopfes (8), die mit der Steuerung signalleitend verbunden ist und auf der ein Gurtband des Stanzteilbandes (1) aufwickelbar ist und das Stanzteilband (1) getaktet vorbewegt.

3. System nach Anspruch 2,
**gekennzeichnet durch** eine zweite Aufwickelrolle (17) an der Zuführseite zum Aufwickeln eines Liners (16).

4. Verfahren zum Aufbringen von Stanzteilen (2) auf eine Oberfläche (11), indem ein Stanzteilband (1) mit den entlang eines Haltegurtes (6) aufgebrachten Stanzteilen (2) mit einer Träger- (3) und einer Klebmasseschicht (4), wobei die Trägerschicht (3) zwischen dem Haltegurt (6) und der Klebmasseschicht (4) angeordnet ist, über einen Stempelkopf (8) eines Stempels (9) bewegt wird und das Stanzteilband (1) gestoppt wird, wenn eines der Stanzteile (2) über dem Stempelkopf (8) positioniert ist und
der Stempel (9) dann in einer Hin-Bewegung mittels eines Roboters das Stanzteil (2) auf die Oberfläche (11) klebt.
**dadurch gekennzeichnet, dass**
ein erster Sensor auf den Stempelkopf (8) gerichtet wird und das Vorhandensein des Stanzteils (2) erkennt und bei Erkennen des Stanzteils (2), das Stanzteilband (1) gestoppt wird und dann der Stempel (9) zur Oberfläche (11) bewegt wird und das Stanzteil (2) aufklebt und dann das Stanzteilband (1) um eines der Stanzteile (2) weitergetaktet wird.

5. Verfahren nach Anspruch 4,
**dadurch gekennzeichnet, dass** eine erste Position auf der Oberfläche (11) bestimmt wird und das Stanzteil (2) auf die erste Position geklebt wird und dass eine zweite Position bestimmt wird und der Stempel (9) während der Weitertaktung zur zweiten Position bewegt wird.

## Claims

1. System comprising a movable robot and an applicator for die-cut parts, wherein the applicator comprises a die-cut-part strip (1) having die-cut parts (2) which are applied along a holding belt (6) and which have a carrier layer (3) and an adhesive layer (4), wherein the carrier layer (3) is arranged between the holding belt (6) and the adhesive layer (4), a punch head (8) over which the die-cut-part strip (1) runs, wherein the die-cut parts (2) running over the punch head (8) face away from the punch head (8) with their adhesive layer (4) and the die-cut parts (2) are able to be pressed onto a surface (11) by means of the punch (9), wherein a controller is connected in a signal-conducting manner to a first sensor, which is directed with a first scanning region at the punch head (8) and registers the presence of one of the die-cut parts (2) at the punch head (8), and to an actuating drive of the punch head (8), and the controller stops a first winding roller (13) of the die-cut-part strip (1) upon registration of one of the die-cut parts (2) at the punch head (8) and then activates the actuating drive and drives a forward movement and a back movement of the applicator (10) together with punch head (8), wherein the applicator (10) is fastened to the movable robot, the controller activates the robot and moves it into a first position above the surface (11) and adhesively bonds the die-cut part (2) in a first surface position and, after the adhesive bonding of the die-cut part (2), activates it and moves it into a second position above the surface (11) and, there, drives a forward movement and a back movement of the punch head (8).

2. System according to Claim 1,
**characterized by** a die-cut-part roller (7) on a supply side of the punch head (8) and by a first winding roller (13), which is connected in a signal-conducting manner to the controller and on which a belt strip of the die-cut-part belt (1) is able to be wound and which cyclically advances the die-cut-part strip (1), on a removal side of the punch head (8) .

3. System according to Claim 2,
**characterized by** a second winding roller (17) on the supply side for winding of a liner (16).

4. Method for applying die-cut parts (2) to a surface (11), in that a die-cut-part strip (1) having the die-cut parts (2), which are applied along a holding belt (6) and which have a carrier layer (3) and an adhesive layer (4), wherein the carrier layer (3) is arranged between the holding belt (6) and the adhesive layer (4), is moved over a punch head (8) of a punch (9) and the die-cut-part strip (1) is stopped when one of the die-cut parts (2) is positioned over the punch head (8) and
the punch (9) then adhesively bonds the die-cut part (2) to the surface (11) in a forward movement by means of a robot,
**characterized in that**
a first sensor is directed at the punch head (8) and detects the presence of the die-cut part (2), and, upon detection of the die-cut part (2), the die-cut-part strip (1) is stopped and then the punch (9) is moved to the surface (11) and adhesively bonds the die-cut part (2), and then the die-cut-part strip (1) is cyclically advanced by one of the die-cut parts (2).

5. Method according to Claim 4,
**characterized in that** a first position on the surface (11) is determined and the die-cut part (2) is adhesively bonded to the first position, and **in that** a second position is determined and the punch (9) is moved during the cyclic advancement to the second position.

## Revendications

1. Système comprenant un robot mobile et un applicateur pour des pièces découpées, l'applicateur comprenant une bande (1) de pièces découpées avec des pièces découpées (2) appliquées le long d'une bande de maintien (6) avec une couche de support (3) et une couche adhésive (4), la couche de support (3) étant disposée entre la bande de maintien (6) et la couche adhésive (4),
une tête de poinçon (8) devant laquelle passe la bande (1) de pièces découpées, les pièces découpées (2) qui passent devant la tête de poinçon (8) étant tournées de sorte que leur couche adhésive (4) soient à l'opposé de la tête de poinçon (8) et les pièces découpées (2) étant aptes à être pressées sur une surface (11) au moyen du poinçon (9),
un système de commande comprenant un premier capteur qui est dirigé vers la tête de poinçon (8) avec une zone de balayage et qui enregistre la présence de l'une des pièces découpées (2) devant la tête de poinçon (8), et un actionneur de la tête de poinçon (8) est connecté de manière conductrice de signaux et la commande d'un premier rouleau d'enroulement (13) de la bande (1) de pièces découpées s'arrête lors de l'enregistrement du fait que l'une des pièces découpées (2) est devant la tête de poinçon (8) puis commande l'actionneur et réalise l'entraînement d'un mouvement de va-et-vient de l'applicateur (10) avec la tête de poinçon (8), l'applicateur (10) étant fixé au robot mobile, le système de commande commandant le robot et le déplaçant jusque dans une première position au-dessus de la surface (11) et collant la pièce découpée (2) dans une première position de surface, et, après le collage de la pièce découpée (2), le commandant et le déplaçant dans une deuxième position au-dessus de la surface (11) et, là, réalise l'entraînement d'un mouvement d'aller et d'un mouvement de retour de la tête de poinçon (8).

2. Système selon la revendication 1,
**caractérisé par** un rouleau (7) de pièces découpées sur un côté alimentation de la tête de poinçon (8) et un premier rouleau d'enroulement (13) sur un côté évacuation de la tête de poinçon (8), qui est relié à la commande de manière conductrice de signaux et sur lequel une bande de ceinture de la bande (1) de pièces découpées est apte à être enroulée et fait avancer la bande (1) de pièces découpées de manière cadencée.

3. Système selon la revendication 2,
**caractérisé par** un deuxième rouleau d'enroulement (17) sur le côté alimentation pour enrouler une doublure (16).

4. Procédé pour appliquer des pièces découpées (2) sur une surface (11), en utilisant une bande (1) de pièces découpées avec les pièces découpées (2) appliquées le long d'une bande de maintien (6) avec une couche de support (3) et une couche adhésive (4), la couche de support (3) étant disposée entre la bande de maintien (6) et la couche adhésive (4), est déplacée au-dessus d'une tête de poinçon (8) d'un poinçon (9) et la bande (1) de pièces découpées est arrêtée lorsque l'une des pièces découpées (2) est positionnée devant la tête de poinçon (8) et
le poinçon (9) colle alors la pièce découpée (2) sur la surface (11) dans un mouvement d'avance au moyen d'un robot,
**caractérisé en ce que**
un premier capteur est dirigé vers la tête de poinçon (8) et détecte la présence de la pièce découpée (2) et, lorsque la pièce découpée (2) est détectée, la bande (1) de pièces découpées est arrêtée, puis le poinçon (9) est déplacé vers la surface (11) et colle la pièce découpée (2), puis la bande (1) de pièces découpées est avancée de manière cadencée autour d'une des pièces découpées (2) .

5. Procédé selon la revendication 4,
**caractérisé en ce qu'**une première position est déterminée sur la surface (11) et la pièce découpée (2) est collée sur la première position, et **en ce qu'**une deuxième position est déterminée et le poinçon (9) est déplacé vers la deuxième position pendant la poursuite du cycle.
